# EUROPEAN PATENT APPLICATION

(11) **EP 1 712 421 A1**
(43) Date of publication of application: **18.10.2006**
(21) Application number: 06075862.0
(22) Date of filing: 11.04.2006
(51) Int. Cl.: B60R 11/02

(54) **Device for suspending a portable computer from a vehicle seat, and use of such a device to realize a minicinema in a vehicle.**

(30) Priority: 12.04.2005 NL 1028744
(71) Applicant: Van Santen, Hendrikus Wilhelmus Maria, 7011 DB Gaanderen (NL)
(72) Inventor: Van Santen, Hendrikus Wilhelmus Maria, 7011 DB Gaanderen (NL)
(74) Representative: van Loon, C.J.J.

(57) **Abstract**

The invention relates to a device (1) for suspending a portable computer (20) from a headrest (25) of a vehicle seat (30). To this end, the device (1) comprises a frame (2), provided with clamping means (10) for fitting the computer (20) to the frame (2) and suspension means (5) for suspension of the frame (2) from the headrest (25), in particular the at least one rod (26) with which the headrest (25) is fitted to the vehicle seat (30). Frame (2), clamping means (10) and/or suspension means (5) are adjustable, so that the frame (2) is universally applicable for computers (20) and/or headrests (25) of different dimensions and/or so that a height and/or orientation of the suspended computer (20) are adjustable. Further, the device (1) preferably has such a design that the suspended computer (20) lies substantially clear, surrounded by air.

## Description

The invention relates to a device for suspending a portable computer in a vehicle.

Use of a portable computer in a vehicle, such as a car, bus or train, often leads to awkward and/or uncomfortable situations. Thus, with use of such a computer on the lap, the view of the screen is usually bad, the operation of the keys is difficult and heat generated by the computer can not or hardly be dissipated, which is bad for the computer and uncomfortable for the user. In addition, such a use on the lap often leads to an ergonomically unsound sitting position, which can result in physical complaints and can usually be maintained for a short time only. Further, as a result of abrupt changes of speed or direction during driving, the computer can easily move or even fall. This is disadvantageous to the computer, since the computer and the software played thereon and can, in addition, result in dangerous situations for fellow passengers. Moreover, these fellow passengers cannot enjoy the computer as well, since the view on the screen will change continuously as a result of the movements mentioned, which is not only tiring, but will also result in a bad picture.

It is therefore an object of the invention to provide a device with which the drawbacks mentioned can at least partly be obviated. More in particular, it is an object of the invention to provide a device with which a portable computer can be suspended from a vehicle seat such that parts of this computer, in particular a keyboard and/or screen, can be used comfortably by at least one and preferably multiple passengers at the same time.

It is a further object of the invention to suspend the computer such that heat generated by this computer during use can be dissipated to a sufficient extent.

Further, it is an object of the invention to provide a device with which a minicinema can be realized in a vehicle.

These and further objects are at least partly achieved with a device according to the invention, comprising a frame, clamping means for fitting a computer to this frame and suspension means for suspension of the frame against a rear side of a vehicle seat, in particular from a headrest of the respective seat.

Thanks to such a device, a portable computer can securely and stably be suspended in a simple manner. Here, by suspending the frame from a rear side of the seat, use is advantageously made of the space which is usually present between the front seats and backseat in, for instance, a passenger car or between the rows of seats arranged one behind the other in a bus or train. By moreover suspending the frame from a headrest, parts of the computer can be located at an easily accessible height.

For instance, the screen of the computer may extend at the height of the headrest. This makes the screen well visible, also for fellow passengers. In addition, these passengers do not need to assume an uncomfortable, bent position, which is favorable to the ease of use and prevents or reduces physical complaints.

In a further embodiment, the keyboard may extend substantially parallel to a back of the vehicle seat, or include an acute angle therewith. With such an orientation of the keyboard, a user has a good view of the keys. In addition, such an orientation can contribute to an ergonomically good operating position.

According to a further embodiment according to the invention, the frame, the clamping means and/or the suspension means are preferably adjustable such that a height and/or orientation of the computer is adjustable. This allows the position of the different computer parts, in particular the screen and the keyboard, to be always optimally adapted to the needs of various users.

Further, the clamping means are preferably adjustable such that, therewith, computers of different dimensions and types can be fitted to the frame, so that a universally applicable device is obtained. With the same object, the suspension means preferably also have an adjustable design so that they are universally applicable with different headrests. Many headrests are connected with a seat by means of two, usually telescopic, rods. The suspension means are preferably designed such that they can be clamped between these rods, for instance with the aid of a spring force provided by the frame. Such a spring-mounted clamping construction can quickly and simply be provided and removed with light manual effort, and, in addition, fits a large number of headrests, with different width dimensions between the rods.

According to an embodiment of the invention, the clamping means with which the computer is fitted to the frame engage the computer such that it can be closed without being hindered (which is usually done by closing the screen against the keyboard). With such an embodiment, the computer can be closed without needing to be detached from the frame, and the computer can simply be removed from the vehicle with frame and all, while the frame can serve as a carrier frame. To this end, the frame may advantageously be provided with a handle.

The clamping means may, for instance, be designed as resilient straps or taut straps, which may be stretched along, for instance, an upper and/or lower edge of the keyboard. Alternatively, the clamping means may, for instance, be designed such that they substantially extend along a circumferential edge of the keyboard, at least a part thereof, while they, for instance, clamp this circumferential edge without extending on a top side of the keyboard.

Preferably, the clamping means are designed such that they can be operated independently of the suspension means so that a user can first fit the computer to the device and then the device to the headrest or vice versa, as desired. Of course, the same freedom of order then holds for detaching the device and the computer.

In a further embodiment according to the invention, the frame, the clamping means and suspension means are preferably designed such that a computer suspended therein lies substantially clear, so that it can be surrounded by air on all sides. As a result, heat generated during use can sufficiently be led away, which is favorable to the operation and lifespan of the computer.

The invention further relates to the use of a device according to the invention to realize a minicinema in a vehicle. To this end, with a device according to the invention, a computer or DVD player can be suspended from a vehicle seat, for playing movies, clips or similar suitable visual material in order to entertain passengers in the vehicle. For the purpose of such an application, the device may be provided with a suitable interface, for connection of multiple headphones to the computer fitted to the device, so that multiple passengers can enjoy vision and sound undisturbed, without hindering a driver of the vehicle therewith. Further, the device can comprise a power supply, such as an extra storage battery, battery or extension lead which can be connected to a power source present in the vehicle, so that the computer not only depends on its own power supply, and the playing time of the computer can be prolonged as needed.

In the further subclaims, further advantageous embodiments are described of a device according to the invention and the use thereof.

By way of explanation, an exemplary embodiment of a device according to the invention will be explained in more detail with reference to the drawing, in which:
Fig. 1 shows a perspective view of a device according to the invention with computer, suspended from a headrest of a vehicle seat;
Fig. 2 shows the device according to Fig. 1, in side elevational view;
Fig. 3 shows, in more detail, the device according to Fig. 1, without computer and in non-mounted condition; and
Fig. 4 shows the device according to Fig. 3, in side elevational view.

In this description, same or corresponding parts have same or corresponding reference numerals. In this description, a portable computer is at least understood to mean an apparatus comprising at least one screen and operating means, such as a keyboard, suitable to work or to play on, such as a laptop, notebook, palmtop, playstation or the like. The term vehicle is at least understood to mean a car, truck, bus, minibus or train.

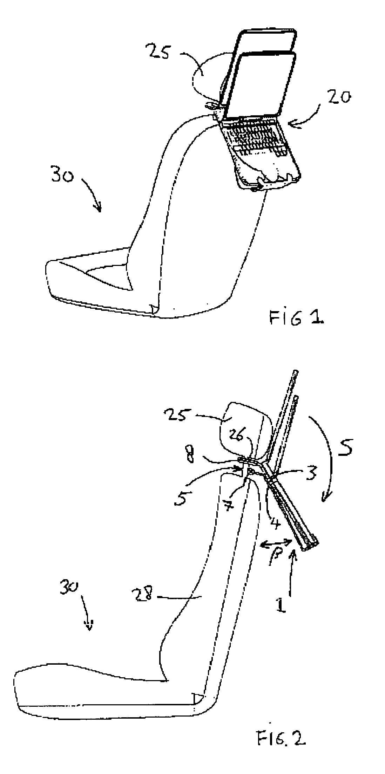

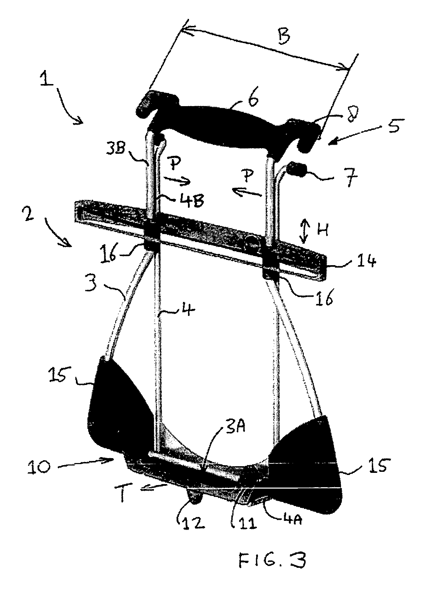

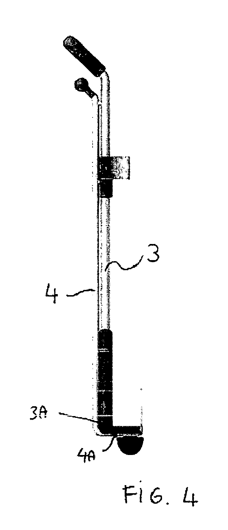

The device 1 according to the invention shown in Figs. 1-4 comprises a frame 2, which is, in the exemplary embodiment shown, built up from two frame parts, namely a main frame 3 and a sub frame 4. Both frame parts 3, 4 have a substantially U-shaped configuration, with two upstanding legs 3B and 4B, respectively, and a bridge part 3A and 4A, respectively, connecting these legs. The frame parts 3, 4 are mutually connected near their respective legs 3B, 4B, approximately halfway these legs, via coupling pieces 16. With a bridge part 4A bent through about 90°, the sub frame 4 further engages around the bridge part 3A of the main frame 3, as can most clearly be seen in Figs. 3 and 4. This bent bridge part 4A thus forms a supporting surface for a computer 5 operatively included in the device 1 (as can be seen in Fig. 2).

As can clearly be seen in Figs. 3 en 4, the free ends of the legs 3B and 4B have been bent through an angle of about 45°, and have been provided with suspension means 5, in the form of hook parts 8 and cylindrical supporting parts 7. Both parts 7, 8 are preferably manufactured from a relatively soft, somewhat resilient material, such as for instance plastic or rubber. The frame parts 3, 4 may, for instance, be manufactured from metal tubes or from plastic sections. Here, the design, the dimensioning and the material are chosen such that the free ends of the legs 3B, 4B can resiliently be moved in each other's direction, in the direction of arrows P, as indicated in Fig. 3.

The device further comprises clamping means 10 for holding or clamping a computer 20 to the frame 2. In the exemplary embodiment shown, these clamping means 10 comprise a clamping construction 11, which can be moved along the bent part 4A of the sub frame 4 in the direction of arrow T (see Fig. 3) and can be fixed in a desired position with the aid of fixing means 12, in order to thus be able to operatively clamp computers 20 of different thicknesses against the sub frame 4 and the main frame 3. The fixing means 12 may, for instance, comprise a setscrew. In the exemplary embodiment shown, the clamping means further comprise a supporting plate 15, which extends along the connecting part 4A of the main frame 4, between the legs 3B. This allows a computer to be supported still better and be clamped against the frame 2 in a rotationally stable manner. Here, the coupling pieces 16 already mentioned can also play a supporting role. In the exemplary embodiment shown, the clamping means 10 further comprise a flexible strap 14, which is clamped between the main frame 3 and the sub frame 4 and which can be provided around a top side of a computer 20. The strap 14 may, for instance, have a resilient design or be provided with a buckle or Velcro, with which the length of the strap 14 can be adjusted to different width dimensions of a computer 20 to be fitted. Further, the strap 14 may be movably included between the frame parts 3, 4, in the direction of arrow H, so that the height of the strap 14 is adjustable, depending on the dimensions of a computer 20 to be clamped. Thus, with the clamping means 10 shown, computers 20 of various dimensions can simply and fixedly be fitted against the frame 2.

The clamping means 10 according to the embodiment shown have the advantage that a computer 20 clamped therein can be closed. That is, a screen of the computer 20 can be closed in the direction of the clamped keyboard, virtually unhindered by the clamping means 10 (as indicated by arrow S in Fig. 2). Here, the flexible strap 14 ensures that the screen does not get damaged. In addition, the dimensions, positioning and design of the clamping means 10 and the supporting frame 2 are chosen such that they do not unnecessarily envelop or cover the computer 20 in clamped condition, so that a good dissipation of heat generated during use is possible. Of course, the clamping means 10 may be designed in many other manners, or other combinations of the clamping means shown can be used.

The device 1 may further comprise a handle 6, for lifting and for transporting the frame 2 and a computer 20 included therein (preferably in the above-mentioned closed position). In the exemplary embodiment shown, this handle 6 extends between the hook parts 8, but of course other embodiments are possible as well. The handle 6 shown may be integrally connected with the hook parts 8, and may, for instance, be manufactured from a somewhat flexible material, such as for instance plastic or rubber, in order not to hinder the moving of the legs 3B in each other's direction.

The device 1 according to the invention can be fitted to a headrest 25 of a vehicle seat 30 as follows, in particular to a headrest 25 which is connected to a back 28 of the seat 30 via two rods 26. To this end, legs 3B, 4B of the frame parts 3, 4 are moved towards each other near their ends, in the direction of arrows P, until an outside dimension B between the hook parts 8 (see Fig. 3) is smaller than an inside dimension (not shown) between the rods 26 of the headrest 25. Then, these legs 3B are put between these rods 26 with the hook parts 8, until the supporting parts 7 of the legs 4B abut the rods 26. Then, the legs 3B, 4B are released, so that they are inclined to spring back to their original (undeformed) position. Thereby, the hook parts 8 will abut the rods 26 and will clamp around these rods 26. Thus, by the hook parts 8 and supporting parts 7, the device 1 is locked against movement and rotation in all directions. It will be clear that, thanks to this clamping construction, the device 1 is applicable with any headrest 25 whose rods 26 are at a mutual distance which is smaller than the outside dimension B between the hook parts 8 of the undeformed legs 3B.

Thanks to the supporting parts 7, the device 1 is suspended at a desired distance from the rods 26 and the seat 30, at a desired angle β. If desired, these supporting parts 7 and/or the ends 4B of the sub frame 4 may be designed so as to be pivotable or adjustable for length, so that this distance and angle β (see Fig. 2) are adjustable by a user.

After the device has thus been suspended from a seat 30, a computer 20 can be fitted to the frame 2, by placing a lower edge of the keyboard against the supporting plate 15 and clamping it with the clamping construction 11, 12 and then clamping an upper edge of the keyboard against the frame 2 and the coupling pieces 16, with the aid of the strap 14. Of course, the order of fitting may also be reversed, while thus, first, the computer 20 is fitted to the device 1 and then the device 1 is suspended from the headrest 25. Here, the legs 3B, 4B of the frame 2 can be moved along the strap 14 in each other's direction undisturbed (in the direction of arrows P).

In an advantageous embodiment, the arrows 3B, 4B of the frame parts 3, 4 may have an at least telescopic design and/or the clamping means 10 may be designed such that they are movable along the frame parts 3, 4 in the direction of arrow H, so that the clamping height of the computer is adjustable, and accordingly the height of, for instance, the keyboard and the screen.

The invention is by no means limited to the exemplary embodiment shown in the description and the drawing. All combinations of (parts of) embodiments described and/or shown are understood to be within the inventive concept. In addition, many variations thereof are possible within the framework of the invention described by the claims.

Thus, the frame can be built up from a single part or from more than two frame parts. Further, the suspension means may be designed completely differently. These may, for instance, be bag-shaped or bracket-shaped, so that the device can be suspended from the cushion-shaped part of a headrest, instead of around the rods. Further, the suspension means may be suitable for fitting around a single rod. If desired, the device may comprise a safety provision, which ensures that, with a great acceleration or deceleration, like with a collision, the computer assumes a position in which the danger to a passenger is minimal, for instance a flat position pressed against the back. Further, connecting means may be provided for connecting the computer to an external power source, for instance of the vehicle. Further, connecting means may be provided for connecting multiple headphones, for multiple passengers.

These and many variations are understood to be within the framework of the invention as set forth in the following claims.

## Claims

1. A device (1) for suspending a computer (20), in particular a portable computer, in a vehicle, wherein the device comprises a frame (2), clamping means (10) for fitting the computer (20) to the frame (2) and suspension means (5) for suspending the frame (2) against a rear side of a vehicle seat (30), from a headrest (25) of the respective seat (30).

2. A device (1) according to claim 1, wherein the frame (2), the suspension means (5) and/or the clamping means (10) cooperate or are adjustable such that a screen of a computer (20) operatively suspended from the vehicle seat (30) extends at the height of the headrest (25) of the respective seat.

3. A device (1) according to claim 1 or 2, wherein the frame (2), the suspension means (5) and/or the clamping means (10) cooperate or are adjustable such that a screen of a computer (20) operatively suspended from the vehicle seat (30) extends substantially parallel to the headrest (25) of the respective seat or includes an acute angle therewith.

4. A device (1) according to any one of the preceding claims, wherein the frame (2), the suspension means (5) and/or the clamping means (10) cooperate or are adjustable such that operating means of a computer (20) operatively suspended from the vehicle seat (30), such as a keyboard, extend substantially parallel to the headrest (25) or a back (28) of the seat (30), or include an acute angle (β) therewith.

5. A device (1) according to any one of the preceding claims, wherein a suspension height (H) of a computer (20) operatively suspended from the vehicle seat (30) is adjustable.

6. A device (1) according to any one of the preceding claims, wherein an orientation of a computer (20) operatively suspended from the vehicle seat (30) is adjustable, in particular an angle (β) between the screen and/or the operating means and a back (28) of the seat (30).

7. A device (1) according to any one of the preceding claims, wherein the suspension means (5) are arranged to be fitted around a rod (26), with which the headrest (25) is fitted to the seat (30).

8. A device (1) according to any one of the preceding claims, wherein the suspension means (5, 8) are arranged to be clamped between two rods (26) of the headrest (25).

9. A device (1) according to claim 8, wherein the suspension means (5, 8) are clampable between the rods (26) of the headrest (25) with the aid of a spring force provided by the frame (2).

10. A device (1) according to any one of the preceding claims, wherein the frame (2) comprises supporting means (7), on which the frame (2), in fitted condition, is supported against the vehicle seat (30), in particular against the headrest (25) or back (28), at a desired distance and/or at a desired angle (β).

11. A device (1) according to claim 10, wherein, with the supporting means (7), an angle (β) and/or distance between the frame (2) and the vehicle seat (30) is adjustable.

12. A device (1) according to any one of the preceding claims, wherein the clamping means (10) are adjustable, for clamping computers (20) of various dimensions.

13. A device (1) according to any one of the preceding claims, wherein the clamping means (10) are designed such that a screen of a laptop or notebook included therein can be closed in the direction of a keyboard.

14. A device (1) according to any one of the preceding claims, wherein the clamping means (10) comprise at least one strap (14), arranged to be clamped around the computer (20), in particular a keyboard thereof.

15. A device (1) according to any one of the preceding claims, wherein the clamping means (10) comprise supporting surfaces (4A, 11, 15, 16), on which and/or against which the computer (20) can be clamped, preferably near a circumferential edge.

16. A device (1) according to any one of the preceding claims, wherein the frame (2) and the clamping means (10) are arranged such that, in suspended condition, the computer lies substantially clear, at least is surrounded by air.

17. A device (1) according to any one of the preceding claims, wherein clamping means (10) and the suspension means (5, 8) are arranged to operate independently of one another, so that an order in which the device (1) is fitted to the headrest (25) and the computer (20) is fitted to the device (1) can be chosen freely, just like an order in which said parts can be detached.

18. A device (1) according to any one of the preceding claims, wherein a handle (6) is provided, by which the device (1) can be lifted, with or without computer (20).

19. A device (1) according to any one of the preceding claims, comprising an interface, arranged for connection of multiple headphones to a computer (20) included in the device (1).

20. A device (1) according to any one of the preceding claims, comprising a provision for connection of a computer (20) included in the device (1) to an external power source.

21. Use of a device (1) according to any one of the preceding claims, in combination with a computer (20), to realize a minicinema, for instance for the benefit of passengers seated on a backseat of a car.
